# EUROPEAN PATENT SPECIFICATION

(11) **EP 4 273 078 B1**
(45) Date of publication and mention of the grant of the patent: **31.07.2024**
(21) Application number: 23170398.4
(22) Date of filing: 27.04.2023
(51) Int. Cl.: B65H 3/08, B65H 15/00, B65H 45/12, B25J 15/06, B42D 1/00, B42D 15/00, G09F 5/04, B25J 9/00, B42C 11/02

(54) **SYSTEM FOR AUTOMATICALLY PRODUCING SAMPLES CARDS OF CLOTH AND METHOD OF OPERATION**
SYSTEM ZUR AUTOMATISCHEN HERSTELLUNG VON STOFFPROBENKARTEN UND BETRIEBSVERFAHREN
SYSTÈME DE PRODUCTION AUTOMATIQUE DE CARTES D'ÉCHANTILLONS DE TISSU ET PROCÉDÉ DE FONCTIONNEMENT

(30) Priority: 02.05.2022 IT 202200008771
(43) Date of publication of application: 08.11.2023
(73) Proprietor: CNC Tessuti S.r.l., 80035 Nola (NA) (IT)
(72) Inventor: CASILLO, Gaetano, Nola (NA) (IT)
(74) Representative: Fiammenghi, Eva

(56) References cited:
- CA-C- 2 490 833
- IT-U1- 201900 004 723
- US-A- 6 086 694
- US-A1- 2008 169 054

## Description

### Field of the invention

The invention refers to the textile industrial field. Even more specifically, the invention is adapted to provide an automatic system for producing sample cards of cloth and relative method of operation.

### Prior art

Sampling on cards is an effective method to provide a quick and meaningful comparison of samples of yarns and cloths to customers.

With the industrialization and computerization of textile production, the use of sample cards has seen its maximum development.

The production processes in general, and in this case in particular the textile one, tend towards a standardization of the production sequences in order to guarantee increasingly reliable products. The same reasoning applies to the sample cards, which today need not only to be as faithful to reality as possible but also to be easily replicable.

To date, the practice of creating virtual samples has also become widespread which, however, in the specific case of textile production, are not representative due to the colors often distorted by the screen but above all due to the impossibility of providing the fundamental tactile sensation when choosing a fabric.

To create a truly functional sample of cloths or fabrics, it is necessary to carry out paper converting operations, cutting and finishing operations on the fabrics chosen to create the so-called sample "swatches", finishing of the fabrics, printing on the cardboard folders and various assemblies. It is thus understood that the standardized creation of a physical cloth sample is an operation that requires great attention, skill, planning, resources and time.

To date, there are numerous industrial patents that describe various machines capable of solving, sometimes in an approximate way, some critical steps of the sample production process.

An example is patent application CA2490833C by G. DOBSON, G. HIRSCH, A. GASTINGER, N. ULMEN, J. BORTZFIELD and J. OWENS. The invention refers to a method and an apparatus for making fabric samples. The method includes applying an adhesive in the form of a tape at predetermined intervals along a length of fabric and cutting the fabric into a series of individual fabric samples such that the adhesive overlaps the first and second lateral edges of the fabric swatches, preventing fraying of the edges. The apparatus includes rollers for applying the adhesive tape to the fabric and a heating device to heat and adhere the adhesive to the fabric. Treated tissue samples can be assembled into a folder or binder for use.

Another example is patent application DE3521951A1 by A.S. DIETHELM. The invention refers to a method and a machine for producing samples.

The machine works semi-automatically, an operator must in any case position the sample to be glued on the conveyor belt. Once the sample has been positioned, the operator operates a pedal and in doing so initiates a sequence of automatic operations. In this sequence, a heated lower die is raised to table level and a pressing die is lowered onto the sample and exerts pressure on the glue point. After an adjustable period, the dies return to their initial position and a feed roller pushes the carrier tape together with the adhesive mesh tape lying on it one step further.

Another example is patent application US3827580A by H. ROHNER. The invention discloses an apparatus for combining fabric swatches with cardboard samples.

Samples are taken one by one from the top of a stack of same-sized (usually different colored) samples, folded, and then applied to a strip of paper and glued to it in the production of sample cards. The sampling is effected by a pick-up head having a pair of elements, each of which carries a series of pins the tips or points of which protrude slightly (0.03-0.6 mm) from the elements. These elements are brought to the upper sample and the tips are moved outward to penetrate this sample. Then the pick-up head is raised, taking only the topmost sample with it.

Another example is patent application IT201900004723U1 by G. CASILLO which discloses the preamble of claim 1 and describes an automated machine which allows to obtain, in a single production line, the creation of finished fabric samples composed of a folded, printed and die-cut card with a fabric flag of any shape and thickness inside and in the upper part of the card a colored stripe.

The inventions mentioned so far by way of example only and not exhaustive, are representative of the inventive-technological framework available today. These inventions describe only part of the fabric sample creation processes or are semi-automatic in nature, requiring the intervention of one or more operators, considerably lengthening production times and reducing the degree of standardization of the samples themselves.

The present invention overcomes the highlighted drawbacks by providing a system and an operating method capable of guaranteeing the complete automation of the fabric sample production process and leaving only a marginal task to the manual activity of the operators.

### Description of the invention

According to the present invention, a system is provided for the automatic production of samples for cloths adapted to guarantee the complete production of sample cards of cloths and/or fabrics of any kind and the relative method of operation.

The system consists of a series of stations in succession to each other to allow, without the aid of human support, the loading and removal of thin cardboards, transport of thin cardboards, printing and gluing of thin cardboards, acquisition of cloth swatches, coupling thin cardboards and swatches, folding the thin cardboard and junction with the swatch, die-cutting of the thin cardboard, gluing and fixing the color stripe, up to the final realization.

The system is provided with a movable trolley, in the upper part of which there is a thin cardboard receiving seat, made up of vertical aluminum profiles, inside which special thin cardboards with folding invitation are inserted. The movable trolley can be fixed to a card pick-up apparatus through a locking system which exploits technology of various kinds such as simply mechanical, pneumatic, electromagnetic and/or other. The card pick-up device is provided with a support with suction cups which is moved vertically, up and down, so that when it is pushed downwards in the first step, the suction cups hook the card and bring it back towards the top. In a second step, the support slides horizontally to place the cardboard on a conveyor belt. Once the thin cardboard has been released, the support and the card pick-up apparatus return to their respective initial positions to restart the pick-up cycle. The conveyor belt is set in motion by an electric motor and/or suitable for exploiting a different technology, the invention also guarantees the set up for the exploitation of renewable energy when coupled to at least a photovoltaic panel. The conveyor belt brings the thin cardboard up to a printer that can have various technologies such as inkjet, laser, thermal transfer to print the desired writings and logos, but also of the three-dimensional type in order to generate bas-relief effects and/or other type on the thin cardboard. The printer also offers the possibility of connecting to a company database to acquire images, text and information in general to enter the description of the fabric, its codes, technical features and symbols relating to the washing instructions for each fabric.

Once out of the printer, the belt carries the thin cardboard until a robotic arm picks it up, turns it over and places it in a folding and die-cutting station. This robotic arm has suction cups that are automatically activated to hook the thin cardboard. The folding and die-cutting station includes a fixed plate with a specially designed housing to allow the suction cups of the robotic arm to get stuck in it and then release the thin cardboard, and on this plate there are other suction cups which, with the help of a mobile arm that moves down and up, hook the thin cardboard to keep it in place. A movable plate at this point folds the thin cardboard which is blocked by the suction cups of the fixed plate. At this point the thin cardboard is die-cut on the basis of a die which is located in the same folding and die-cutting station. The thin cardboard thus printed, folded and die-cut is sent to a gluing and press station where it is sprinkled with glue dispensed by at least a nozzle, and the fabric swatches taken by a special robot with gripper are glued onto it. This gripper consists of a support reel onto which adhesive tape is placed and then unrolled, sticky side out, under a rounded base and re-rolled onto a secondary reel. The operation of the gripper is also guaranteed through the use of a blown air coupling system with holes arranged on the upper and lower part. The support reel and secondary reel then move in sync and stop whenever a cloth swatch is picked up. The swatches placed below the fold line are then pressed in the gluing and pressing station. Once the cloth swatches have been fixed to the thin cardboard, the still incomplete sample collection is sent to a die-cutting station for hooks where a die-cutter operates by pressing the hooks onto the thin cardboard. The semi-finished product is sent to a color stripe application station by means of a suitable handling apparatus which includes various suction cups and mechanical components able to move the samples in various directions. Here at least a color stripe is taken from its housing in order to be glued and pressed to the sample cards. The complete sample card is released in an unloading station after final inspection, in the event of a negative outcome of the inspection, it is sent to a waste section.

The entire process is automated, managed and monitored by a Programmable Logic Controller (PLC).

The system comprises a control system which facilitates the monitoring of the inventory status of cards, fabric swatches and color stripes. The monitoring system uses filling sensors that detect the presence of materials in the respective housings. This sensor can take advantage of infrared, optical, with calibrated weight measurement and/or other types of technology to guarantee an optimal estimate of the presence of the raw materials necessary for the creation of the samples.

The advantages offered by the present invention are clear in the light of the above description and will be even clearer from the accompanying figures and the related detailed description.

### Description of the figures

The invention will hereinafter be described in at least a preferred embodiment thereof by way of non-limiting example with the aid of the accompanying figures, in which:
- FIGURE 1 shows a general view of the system 100 for automatically producing sample cards of cloth with some detailed views;
- FIGURE 2 shows a detail view of the gripper 144 and of the gluing and pressing station 160 of said system for automatically producing sample cards of cloth 100;

- FIGURE 3 shows two detail views of the robotic arm 140 and of the folding and die-cutting station 150 of said system for automatically producing sample cards of cloth 100 in two different moments of the production process;
- FIGURE 4 shows a flowchart representing the method 200 of operation of said system for automatically producing sample cards of cloth 100.

### Detailed description of the invention

The present invention will now be described purely by way of non-limiting or binding example with the aid of the figures, which illustrate some embodiments relative to the present inventive concept.

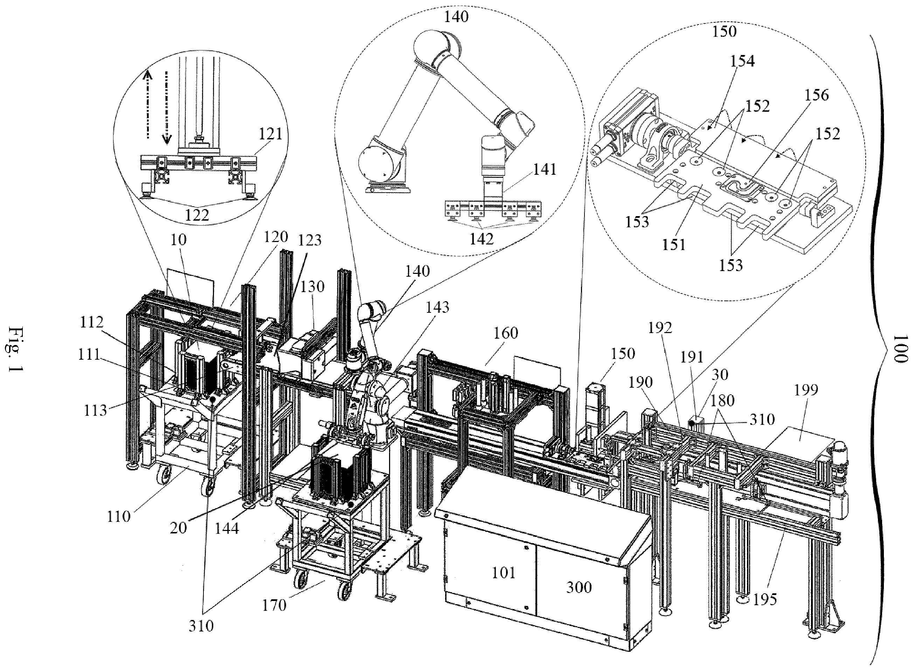

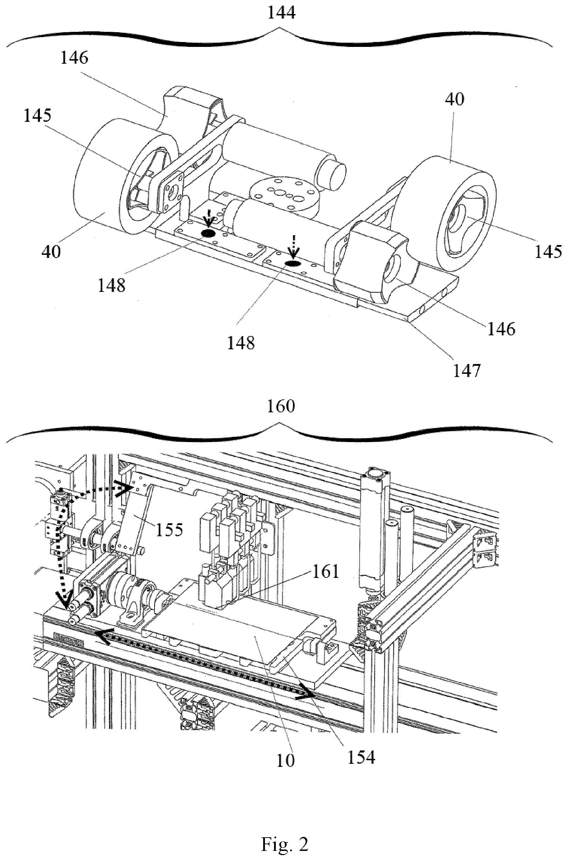

With reference to FIG. 1, a general view and some detailed views of said system for automatically producing sample cards of cloth 100 according to the present invention is shown. FIG. 2 shows details of some components of said system for automatically producing sample cards of cloth 100. In FIG. 1 and 2, as in the following description, the embodiment of the present invention considered to be the best to date is illustrated.

Said system for automatically producing sample cards of cloth 100, adapted to automatically produce a sample card 50 composed of a thin cardboard 10, a set of fabric swatches 20 and a color stripe 30, comprising at least a Programmable Logic Controller PLC 101, at least a movable trolley 110, at least a receiving seat 111, metal profiles 112, at least a locking system 113, at least a thin cardboard pick-up device 120, at least a support 121, at least a suction cup 122, at least a conveyor belt 123, at least a printer 130, at least a robotic arm 140, at least an end support 141, at least an arm suction cup 142, at least a robot 143, at least a gripper 144, at least a support reel 145, at least a secondary reel 146, at least a rounded base 147, at least a blown air coupling system 148, at least a folding and die-cutting station 150, at least a fixed plate 151, at least a fixed suction cup 152, at least a housing 153, at least a movable plate 154, at least a movable arm 155, at least a die 156, at least a gluing and die cutting station 160, at least a nozzle 161, at least a swatch carrying trolley 170, at least a handling apparatus 180, at least a color stripe application station 190, at least a stripe housing 191, at least an unloading station 195, at least a waste section 199, at least a monitoring apparatus 300, at least a filling sensor 310.

Said programmable logic controller or PLC 101 is adapted to manage, monitor and check each process step. Said movable trolley 110 houses said receiving seat 111 made up of metal profiles 112, suitable for containing said thin cardboard 10. Said movable carriage 110 is capable of hooking up to said thin cardboard pick-up apparatus 120 through said locking system 113.

Said thin cardboard pick-up apparatus 120 is adapted to slide said support 121, on which there are some units of said suction cup 122 which collects said thin cardboard 10 and arranges it on said conveyor belt.

Said printer 130 is suitable for making prints on said thin cardboard 10 which arrives from said conveyor belt 123. The thin cardboard 10 thus printed is picked by said robotic arm 140 which includes said end support 141 and at least a unit of said arm suction cup 142. Said robotic arm 140 then picks up said thin cardboard 10, turns it over and deposits it in said folding and die cutting station 150.

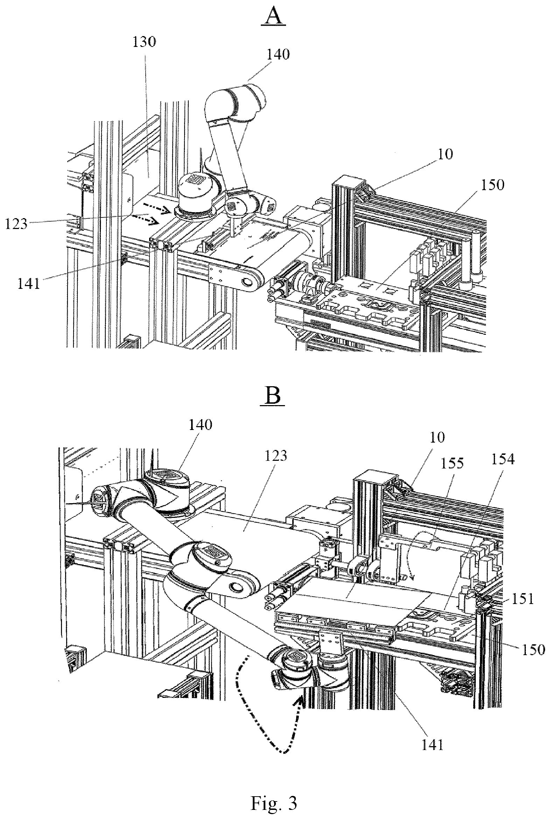

With reference to FIG. 3, two detail views of said robotic arm 140 and of the folding and die-cutting station 150 of said system for automatically producing sample cards of cloth 100 are shown in two different moments of the production process. In detail, FIG. 3 (A) shows said robotic arm 140 which, through said end support 141, picks up said thin cardboard 10 coming out of said printer 130. FIG. 3 (B) instead shows said robotic arm 140 which has rotated said thin cardboard 10 and is preparing to release it into said folding and die cutting station 150. With reference to FIGS. 1, 2 and 3 again it is possible to observe that said folding and die cutting station 150 comprises said fixed plate 151 with four units of said fixed suction cup 152 and four units of said housing 153. Said movable arm 155 presses the thin cardboard 10 against said fixed suction cup 10 to make it adhere well and said movable plate 154 rotates to fold it. Finally, said folding and die cutting station 150 also includes said die 156 to allow a first die cutting of the thin cardboard 10. Said gluing and pressing station 160 which includes said nozzle 161, releases glue on said thin cardboard 10, meanwhile, said robot 143 picks up said set of cloth swatches 20 with said gripper 144 from said swatch carrying trolley 170.

Said gripper 144 of said robot 143 comprises two units of said support reel 145 on which adhesive tape 40 is positioned which is unrolled passing under said rounded base 147 and re-rolled onto another two units of said secondary reel 146. The gripper 144 further comprises said blown air coupling system 148 with holes arranged on the upper and lower part. Said handling apparatus 180 displaces in a synchronous and continuous manner said thin cardboard 10 combined with said set of swatches 20. Said color stripe application station 190 picks up said color stripe 30 from said stripe housing 191 and glues it onto said thin cardboard 10 to then press it by means of said press 192. Said set of swatches 50, now complete, arrives in said unloading station 195 or, if it does not meet the production quality standards, it is placed in said waste section 199.

Said control system 300 is adapted to monitor the status of the stocks of said thin cardboard 10, said set of cloth swatches 20 and said color stripe 30. The control system 300 is adapted to comprise at least a filling sensor 310 which detects the presence of said thin cardboard 10, said set of cloth swatches 20 and/or said color stripe 30 in the respective housings.

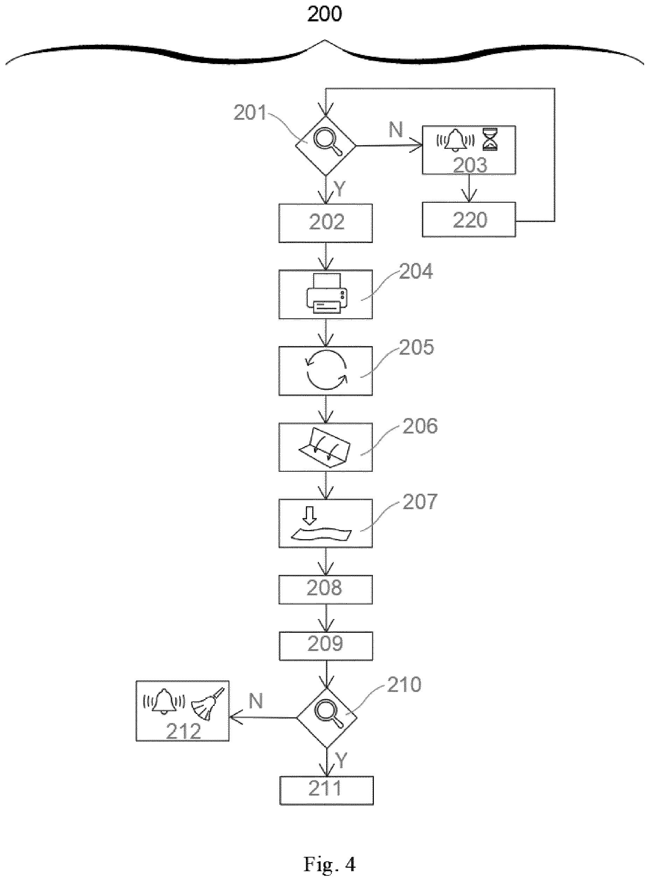

With reference to FIG. 4, a flowchart representing the method 200 of operation of said system for automatically producing sample cards of cloth 100 is shown. Said method 200 will be described with reference to FIGS. 1, 2, 3 and 4.

Said method 200 comprises a pick-up step 202, at least a checking step 201, at least a warning and standby step 203 which requires an input 220 from an operator 1, a printing step 204, an overturning step 205, a folding and die-cutting step 206, a swatch picking step 207, a gluing and pressing step 208, a color stripe gluing step 209, a final inspection step 210, an unloading step 211, a sample card rejection warning step 212.

Said operating method 200 begins with said checking step 201. In said checking step 201, the filling status of said receiving seat 111, of said swatch carrying trolley 170 and of said stripe housing 191 is checked. This checking step 201 can return a positive (*Y*) or negative (*N*) outcome. When the outcome is positive (*Y*), the method continues with said pick-up step 202.

In said pick-up step 202 of said thin cardboard 10 from said movable trolley 110, by said cardboard pick-up apparatus 120 which positions the same on the belt conveyor 123. When the outcome is negative (*N*), said thin cardboard pick-up apparatus 120 stops and the method 200 continues with a warning and standby step 203.

Said warning and standby step 203 is adapted to provide a warning signal and to stop the operations of the system until said receiving seat 111 is filled with said thin cardboard 10, said swatch carrying trolley 170 is filled with said set of cloth swatches 20 and/or said stripe housing 191 is filled with said color stripe 30 and an operator 1 provides an input 220 of successful filling. The method 200 continues with said molding step 204 of said thin cardboard 10 by said printer 130. Next is said step of overturning 205 said thin cardboard 10, performed by said robotic arm 140, which first takes it over at the outlet from said printer 130, then overturns it, and thereafter puts it in said folding and die cutting station 150 for the subsequent folding and die cutting step 206. Said swatch pick-up step 207 is adapted to pick up said set of cloth swatches 20 by said robot 143 which takes them from said swatch carrying trolley 170 subsequently, in said gluing and pressing step 208, said set of cloth swatches 20 is glued onto said thin cardboard 10 in said gluing and pressing station 160. In said stripe gluing step 209, said color stripe 30 is glued to the thin cardboard 10 by means of said station 190 for applying color stripes. The method therefore provides for said final inspection step 210 of the sample card 50 made by the system. This final inspection step 210 is also adapted to provide a positive (*Y*) or negative (*N*) result. When the result is positive (*Y*), the method continues with said unloading step 211 of said sample card 50 in said unloading station 195. When the outcome is negative (*N*), said method provides for the sending of said sample card 50 to a waste section 199 and the start of a sample card rejection warning step 212.

Finally, it is clear that modifications, additions or variants may be made to the invention described thus far which are apparent to those skilled in the art, without departing from the scope of protection that is provided by the appended claims.

## Claims

1. A system (100) for automatically producing sample cards of cloth, adapted for producing in an automatic manner a sample card (50) composed of a thin cardboard piece (10), a set of swatches (20), a color stripe (30), the system (100) comprising:
- at least a programmable logic controller or PLC (101) configured to manage, monitor and check each process step;
- at least a cardboard pick-up apparatus (120) adapted to cause the sliding of a support (121) with at least a suction cup (122), used to displace said thin cardboard pieces (10) and place them on at least a belt conveyor (123);
- at least a movable trolley (110), presenting at least a receiving seat (111) composed of metal profiles (112), configured to contain at least a thin cardboard piece (10); said movable trolley (110) can hook onto said cardboard pick-up apparatus (120) by virtue of a locking system (113); wherein said locking system (113) may exploit various technologies, for instance a purely mechanical one, a pneumatic or electromagnetic technology, and/or of other kind;
- at least a printer (130) configured to make prints on said thin cardboard piece (10);
- at least a robotic arm (140), including an end support (141) with at least an arm suction cup (142) adapted to pick up said thin cardboard piece (10) from said printer (130) and overturn it;
- at least a folding and die cutting station (150), comprising a stationary plate (151) having at least a stationary suction cup (152) and at least a seat (153), one movable plate (154) for folding said thin cardboard (10), a movable arm (155) for pressing the thin cardboard piece against the stationary suction cup (152); wherein said stationary plate (151) accommodates at least a die (156) adapted to allow die cutting of said thin cardboard piece (10);
- at least a gluing and pressing station (160), with at least a nozzle (161) adapted to distribute an adhesive on said thin cardboard (10);
- at least a swatch carrying trolley (170), adapted to contain at least a set of swatches of cloth (20);
- at least a robot (143), configured to pick up said set of swatches (20) by means of a gripper (144) provided at its end;
- at least a handling apparatus (180), adapted to displace in a synchronous and continuous manner said thin cardboard (10) combined with said set of swatches (20);
- at least a station (190) for applying color stripes, adapted to pick up at least a color stripe (30) from a stripe housing (191) and to glue it on said thin cardboard (10), and thereafter to press it by means of at least a press (192);
- at least a discharge station (195), for discharging the finished sample card (50); the system (100) **characterised by**
- at least a waste station (199) adapted to receive said sample card (50) if it has production defects;
- a control system (300) adapted for monitoring the condition of the stocks of said thin cardboard (10), said set of swatches (20) and said color stripe (30); wherein said control system (300) includes at least a fill sensor (310) adapted to detect the presence, inside the respective housings, of said thin cardboard (10), said set of swatches (20) and/or said color stripe (30); said fill sensor (310) is based on an infrared, optical, or calibrated weight-measuring technology, and/or of any other kind, in order to ensure an excellent estimate for the presence of components like said thin cardboard (10), said set of swatches of cloth (20) and said color stripe (30) inside the respective housings.

2. A system (100) for automatically producing sample cards of cloth, according to the preceding claim 1, **characterized in that** said conveyor belt (123) is driven by an electric motor and/or is adapted to use a different technology; wherein said conveyor belt is adapted to use renewable energy if coupled to at least a photovoltaic panel (124).

3. A system (100) for automatically producing sample cards of cloth, according to any one of the preceding claims, **characterized in that** said printer (130) is adaptable to use various technologies like inkjet, laser, thermal transfer, and/or tridimensional, in order to generate effects like a bas-relief and/or of other kinds, on said thin cardboard pieces (10).

4. A system (100) for automatically producing sample cards of cloth, according to any one of the preceding claims, **characterized in that** said printer (130) is configured to connect itself to IT systems and/or databases in order to acquire data, images, and texts to be printed, for example the description of the cloths, the relative codes and technical features, as well as symbols containing information about washing procedures.

5. A system (100) for automatically producing sample cards of cloth, according to any one of the preceding claims, **characterized in that** said gripper (144) of said robot (143) comprises at least a support reel (145) carrying an adhesive tape (40), which is unrolled, passes under a rounded base (147), and is rolled up again on at least a second reel (146); wherein said gripper (144) includes at least a blown air coupling system (148) with holes arranged on the upper and lower sides; wherein said support reel (145) and said second support reel (146) are adapted to move in synchronism, and to stop moving when a unit is picked up from said set of swatches of cloth (20).

6. A method (200) for operating a system (100) for automatically producing sample cards of cloth, **characterized in that** it uses the system according to any one of the preceding claims, and **in that** it comprises the following steps:
- checking (201) the fill level of: said receiving seat (111), said swatch carrying trolley (170) and said stripe housing (191); wherein said checking step (201) yields a positive result (*Y*) or a negative result (*N*); if said result is positive (*Y*), the method goes to the pick-up step (202); if said result is negative (*N*), the cardboard pick-up apparatus (120) stops, and the method (200) continues with a warning and stand-by step (203); said warning and standby step (203) provides a warning signal and stops the operations performed by the system until said receiving seat is again filled with said thin cardboard (10), said swatch carrying trolley (170) is again filled with said set of cloth swatches (20) and/or said stripe housing (191) is refilled with said color stripe (30), and until an operator (1) provides an input (220) concerning the occurred refilling;
- picking up (202) of said thin cardboard (10) from said movable trolley (110), by said cardboard pick-up apparatus (120) which positions the same on the belt conveyor (123);
- printing (204) of the thin cardboard (10), performed by said printer (130);
- overturning (205) of the thin cardboard (10), performed by said robotic arm (140), which first takes it over at the outlet from said printer (130), then overturns it, and thereafter puts it in said folding and die cutting station (150);
- folding and die cutting (206) the thin cardboard (10) by means of said folding and die cutting station (150);
- removal of the swatches (207); in this step the robot (143) picks up the set of swatches (20), taking them from said swatch carrying trolley (170);
- gluing and pressing (208) the set of swatches (20) onto said thin cardboard (10), in said gluing and pressing station (160);
- gluing of said color stripes (209), wherein said color stripe (30) is glued to the thin cardboard (10) by means of said station (190) for applying color stripes;
- final inspection (210) of the sample card (50) realized by the system; said step of final inspection (210) provides a positive result (*Y*) or a negative result (*N*); in the affirmative case (*Y*), the method goes to the discharge step (211) in which the sample card (50) is discharged in said discharge station (195); if the result is negative (*N*), said method provides for a transfer of said sample card (50) to a waste station (199) and triggers a step of sample card rejection warning (212).

7. A method (200) for operating a system (100) for automatically producing sample cards of cloth, according to any one of the preceding claims, **characterized in that** said warning and standby step (203) uses light signals, acoustic signals and information technology signaling in order to send a warning.

8. A method (200) for operating a system (100) for automatically producing sample cards of cloth, according to any one of the preceding claims, **characterized in that** said input (220) provided by the operator (1) can be of the information technology kind, mechanical kind, require biometric identification and/or of any other kind that allows safe unlock of the system.

## Patentansprüche

1. System (100) zur automatischen Herstellung von Stoffprobenkarten, das zum Herstellen einer aus einem dünnen Kartonstück (10), einem Satz von Mustern (20) und einem Farbstreifen (30) zusammengesetzten Stoffprobenkarte (50) auf eine automatische Weise geeignet ist, wobei das System (100) aufweist:
- zumindest einen programmierbaren Logik-Controller oder PLC (101), der dazu ausgebildet ist, jeden Prozessschritt zu verwalten, zu überwachen und zu prüfen;
- zumindest eine Kartonaufnahmevorrichtung (120), die geeignet ist, das Gleiten eines Trägers (121) mit zumindest einem Sauger (122) zu bewirken, die verwendet wird, um dünne Kartonstücke (10) zu verlagern und sie auf zumindest einem Förderband (123) zu platzieren;
- zumindest einen beweglichen Wagen (110), der zumindest einen Aufnahmesitz (111) aus Metallprofilen (112) aufweist, der dazu ausgebildet ist, zumindest ein dünnes Kartonstück (10) aufzunehmen; wobei der bewegliche Wagen (110) durch ein Verriegelungssystem (113) an der Kartonaufnahmevorrichtung (120) einhaken kann; wobei das Verriegelungssystem (113) verschiedene Technologien nutzen kann, zum Beispiel eine rein mechanische, eine pneumatische oder elektromagnetische Technologie, und/oder anderer Art;
- zumindest einen Drucker (130), der dazu ausgebildet ist, Drucke auf dem dünnen Kartonstück (10) herzustellen;
- zumindest einen Roboterarm (140), der eine Endstütze (141) mit zumindest einem Armsauger (142) enthält, der geeignet ist, das dünne Kartonstück (10) von dem Drucker (130) aufzunehmen und es umzudrehen;
- zumindest eine Falt- und Stanzstation (150), die eine stationäre Platte (151) mit zumindest einem stationären Sauger (152) und zumindest einem Sitz (153) aufweist, eine bewegliche Platte (154) zum Falten des dünnen Kartonstücks (10), einen beweglichen Arm (155) zum Pressen des dünnen Kartonstücks gegen den stationären Sauger (152); wobei die stationäre Platte (151) zumindest eine Stanzform (156), die geeignet ist, das Stanzen des dünnen Kartonstücks (10) zu ermöglichen, beherbergt;
- zumindest eine Klebe- und Pressstation (160) mit zumindest einer Düse (161), die geeignet ist, einen Klebstoff auf den dünnen Karton (10) zu verteilen;
- zumindest einen mustertragenden Wagen (170), der geeignet ist, zumindest einen Satz von Stoffmustern (20) zu enthalten;
- zumindest einen Roboter (143), der dazu ausgebildet ist, den Satz von Mustern (20) mittels eines an seinem Ende vorgesehenen Greifers (144) aufzunehmen;
- zumindest eine Handhabungsvorrichtung (180), die geeignet ist, den dünnen Karton (10), kombiniert mit dem Satz von Mustern (20), auf eine synchrone und kontinuierliche Weise zu verlagern;
- zumindest eine Station (190) zum Aufbringen von Farbstreifen, die geeignet ist, zumindest einen Farbstreifen (30) aus einem Streifengehäuse (191) aufzunehmen und ihn auf den dünnen Karton (10) zu kleben und ihn danach mittels zumindest einer Presse (192) zu pressen;
- zumindest eine Ausgabestation (195) zum Ausgeben der fertigen Probenkarte (50); wobei das System (100) **gekennzeichnet ist durch**
- zumindest eine Abfallstation (199), die geeignet ist, die Probenkarte (50) aufzunehmen, wenn sie Produktionsfehler aufweist;
- ein Steuerungssystem (300), das zum Überwachen des Zustands der Bestände des dünnen Kartons (10), des Satzes von Mustern (20) und des Farbstreifens (30) geeignet ist; wobei das Steuerungssystem (300) zumindest einen Füllsensor (310) enthält, der geeignet ist, das Vorhandensein des dünnen Kartons (10), des Satzes von Mustern (20) und/oder des Farbstreifens (30) innerhalb der jeweiligen Gehäuse zu detektieren; wobei der Füllsensor (310) auf einer Infrarot-, optischen oder kalibrierten Gewichtsmesstechnologie und/oder einer anderen Art basiert, um eine exzellente Schätzung für das Vorhandensein von Komponenten wie dem dünnen Karton (10), dem Satz von Mustern (20) und dem Farbstreifen (30) innerhalb der jeweiligen Gehäuse zu gewährleisten.

2. System (100) zur automatischen Herstellung von Stoffprobenkarten nach dem vorhergehenden Anspruch 1, **dadurch gekennzeichnet, dass** das Förderband (123) durch einen Elektromotor angetrieben wird und/oder geeignet ist, eine andere Technologie zu verwenden; wobei das Förderband geeignet ist, erneuerbarer Energie zu verwenden, wenn es mit zumindest einem Photovoltaik-Panel (124) gekoppelt ist.

3. System (100) zur automatischen Herstellung von Stoffprobenkarten nach einem der vorhergehenden Ansprüche, **dadurch gekennzeichnet, dass** der Drucker (130) angepasst werden kann, verschiedene Technologien wie Tintenstrahl, Laser, Thermotransfer und/oder dreidimensional zu verwenden, um Effekte wie ein Basrelief und/oder andere Arten auf den dünnen Kartonstücken (10) zu erzeugen.

4. System (100) zur automatischen Herstellung von Stoffprobenkarten nach einem der vorhergehenden Ansprüche, **dadurch gekennzeichnet, dass** der Drucker (130) dazu ausgebildet ist, sich mit IT-Systemen und/oder Datenbanken zu verbinden, um Daten, Bilder und Texte, die gedruckt werden sollen, zu erfassen, zum Beispiel die Beschreibung der Stoffe, die entsprechenden Codes und technischen Merkmale sowie Symbole, die Informationen über Waschverfahren enthalten.

5. System (100) zur automatischen Herstellung von Stoffprobenkarten nach einem der vorhergehenden Ansprüche, **dadurch gekennzeichnet, dass** der Greifer (144) des Roboters (143) zumindest eine Stützrolle (145) aufweist, die ein Klebeband (40), das abgerollt wird, unter einer abgerundeten Basis (147) hindurchläuft und auf zumindest einer zweiten Rolle (146) wieder aufgerollt wird, trägt; wobei der Greifer (144) zumindest ein Blasluft-Kopplungssystem (148) mit Löchern, die an der Ober- und Unterseite angeordnet sind, enthält; wobei die Stützrolle (145) und die zweite Stützrolle (146) geeignet sind, sich synchron zu bewegen und das sich Bewegen zu stoppen, wenn eine Einheit aus dem Satz von Mustern (20) aufgenommen wird.

6. Verfahren (200) zum Betreiben eines Systems (100) zur automatischen Herstellung von Stoffprobenkarten, **dadurch gekennzeichnet, dass** es das System nach einem der vorhergehenden Ansprüche verwendet und dass es die folgenden Schritte aufweist:
- Prüfen (201) des Füllpegels: des Aufnahmesitzes (111), des mustertragenden Wagens (170) und des Streifengehäuses (191); wobei der Prüfschritt (201) ein positives Ergebnis (Y) oder ein negatives Ergebnis (N) ergibt; wenn das Ergebnis positiv (Y) ist, geht das Verfahren zum Aufnahme-Schritt (202); wenn das Ergebnis negativ (N) ist, stoppt die Kartonaufnahmevorrichtung (120) und das Verfahren (200) fährt mit einem Warn- und Bereitschaftsschritt (203) fort; wobei der Warn- und Bereitschaftsschritt (203) ein Warnsignal liefert und die durch das System durchgeführten Operationen stoppt, bis der Aufnahmesitz wieder mit dem dünnen Karton (10) gefüllt ist, der mustertragende Wagen (170) wieder mit dem Satz von Stoffmustern (20) gefüllt ist und/oder das Streifengehäuse (191) wieder mit dem Farbstreifen (30) wieder nachgefüllt ist, und bis ein Bediener (1) eine Eingabe (220) bezüglich des erfolgten Nachfüllens liefert;
- Aufnehmen (202) des dünnen Kartons (10) von dem beweglichen Wagen (110) durch die Kartonaufnahmevorrichtung (120), die denselben auf dem Förderband (123) positioniert;
- Bedrucken (204) des dünnen Kartons (10), durchgeführt durch den Drucker (130);
- Umdrehen (205) des dünnen Kartons (10), durchgeführt durch den Roboterarm (140), der ihn zunächst am Ausgang des Druckers (130) übernimmt, ihn dann umdreht und ihn danach in die Falt- und Stanzstation (150) legt;
- Falten und Stanzen (206) des dünnen Kartons (10) mittels der Falt- und Stanzstation (150);
- Entnahme der Muster (207); in diesem Schritt nimmt der Roboter (143) den Satz von Mustern (20) auf, indem er sie von dem mustertragenden Wagen (170) nimmt;
- Kleben und Pressen (208) des Satzes von Mustern (20) auf den dünnen Karton (10) in der Klebe- und Pressstation (160);
- Kleben der Farbstreifen (209), wobei der Farbstreifen (30) mittels der Station (190) zum Aufbringen von Farbstreifen auf den dünnen Karton (10) geklebt wird;
- Endkontrolle (210) der durch das System realisierten Probenkarte (50); der Schritt der Endkontrolle (210) liefert ein positives Ergebnis (Y) oder ein negatives Ergebnis (N); im positiven Fall (Y) geht das Verfahren zu dem Entladeschritt (211) über, in dem die Probenkarte (50) in der Entladestation (195) entladen wird; wenn das Ergebnis negativ (N) ist, sorgt das Verfahren für einen Transfer der Probenkarte (50) an eine Abfallstation (199) und löst einen Schritt der Probenkartezurückweisungswarnung (212) aus.

7. Verfahren (200) zum Betreiben eines Systems (100) zur automatischen Herstellung von Stoffprobenkarten nach einem der vorhergehenden Ansprüche, **dadurch gekennzeichnet, dass** der Warn- und Bereitschaftsschritt (203) Lichtsignale, akustische Signale und Informationstechnologie-Signalisierung verwendet, um eine Warnung zu senden.

8. Verfahren (200) zum Betreiben eines Systems (100) zur automatischen Herstellung von Stoffprobenkarten nach einem der vorhergehenden Ansprüche, **dadurch gekennzeichnet, dass** die durch den Bediener (1) gelieferte Eingabe (220) von informationstechnischer Art, mechanischer Art, biometrische Identifikation und/oder jede andere Art, die eine sichere Entriegelung des Systems ermöglicht, erfordern kann.

## Revendications

1. Système (100) pour produire automatiquement des nuanciers de tissu, adapté pour produire d'une manière automatique un nuancier (50) composé d'un morceau de carton mince (10), d'un ensemble d'échantillons (20), d'une bande de couleur (30), le système (100) comprenant :
- au moins un automate programmable ou PLC (101) configuré pour gérer, surveiller et vérifier chaque étape de procédé ;
- au moins un appareil de saisie de carton (120) adapté pour provoquer le glissement d'un support (121) avec au moins une ventouse (122), utilisée pour déplacer lesdits morceaux de carton mince (10) et les placer sur au moins un transporteur à courroie (123) ;
- au moins un chariot mobile (110), présentant au moins un siège de réception (111) composé de profilés métalliques (112), configuré pour contenir au moins un morceau de carton mince (10) ; ledit chariot mobile (110) peut s'accrocher audit appareil de saisie de carton (120) grâce à un système de verrouillage (113) ; dans lequel ledit système de verrouillage (113) peut exploiter diverses technologies, par exemple une purement mécanique, une technologie pneumatique ou électromagnétique, et/ou d'un autre type ;
- au moins une imprimante (130) configurée pour faire des impressions sur ledit morceau de carton mince (10) ;
- au moins un bras robotisé (140), comportant un support terminal (141) avec au moins une ventouse de bras (142) adaptée pour saisir ledit morceau de carton mince (10) à partir de ladite imprimante (130) et le retourner ;
- au moins un poste de pliage et de découpage à l'emporte-pièce (150), comprenant une plaque fixe (151) ayant au moins une ventouse fixe (152) et au moins un siège (153), une plaque mobile (154) pour plier ledit carton mince (10), un bras mobile (155) pour presser le morceau de carton mince contre la ventouse fixe (152) ; dans lequel ladite plaque fixe (151) est dotée d'au moins un emporte-pièce (156) adapté pour permettre un découpage à l'emporte-pièce dudit morceau de carton mince (10) ;
- au moins un poste de collage et de pressage (160), avec au moins une buse (161) adaptée pour distribuer un adhésif sur ledit carton mince (10) ;
- au moins un chariot de port d'échantillons (170), adapté pour contenir au moins un ensemble d'échantillons (20) de tissu ;
- au moins un robot (143), configuré pour saisir ledit ensemble d'échantillons (20) au moyen d'un organe de préhension (144) fourni à son extrémité ;
- au moins un appareil de manipulation (180), adapté pour déplacer d'une manière synchrone et continue ledit carton mince (10) combiné avec ledit ensemble d'échantillons (20) ;
- au moins un poste (190) pour appliquer des bandes de couleur, adapté pour saisir au moins une bande de couleur (30) à partir d'un logement de bande (191) et pour la coller sur ledit carton mince (10), et ensuite pour la presser au moyen d'au moins une presse (192) ;
- au moins un poste de décharge (195), pour décharger le nuancier (50) terminé ; le système (100) étant **caractérisé par**
- au moins un poste de rebut (199) adapté pour recevoir ledit nuancier (50) s'il a des défauts de production ;
- un système de commande (300) adapté pour surveiller l'état des stocks dudit carton mince (10), dudit ensemble d'échantillons (20) et de ladite bande de couleur (30) ; dans lequel ledit système de commande (300) comporte au moins un capteur d'approvisionnement (310) adapté pour détecter la présence, à l'intérieur des logements respectifs, dudit carton mince (10), dudit ensemble d'échantillons (20) et/ou de ladite bande de couleur (30) ; ledit capteur d'approvisionnement (310) est basé sur une technologie infrarouge, optique ou de pesage étalonné, et/ou de n'importe quel autre type, afin de garantir une excellente estimation de la présence d'éléments comme ledit carton mince (10), ledit ensemble d'échantillons (20) de tissu et ladite bande de couleur (30) à l'intérieur des logements respectifs.

2. Système (100) pour produire automatiquement des nuanciers de tissu, selon la revendication 1 précédente, **caractérisé en ce que** ladite courroie transporteuse (123) est entraînée par un moteur électrique et/ou est adaptée pour utiliser une technologie différente ; dans lequel ladite courroie transporteuse est adaptée pour utiliser de l'énergie renouvelable si elle est couplée à au moins un panneau photovoltaïque (124).

3. Système (100) pour produire automatiquement des nuanciers de tissu, selon l'une des revendications précédentes, **caractérisé en ce que** ladite imprimante (130) est adaptable pour utiliser diverses technologies comme jet d'encre, laser, transfert thermique et/ou trois dimensions, afin de générer des effets comme un bas-relief et/ou d'autres types, sur lesdits morceaux de carton mince (10).

4. Système (100) pour produire automatiquement des nuanciers de tissu, selon l'une des revendications précédentes, **caractérisé en ce que** ladite imprimante (130) est configurée pour se connecter elle-même à des systèmes de la TI et/ou des bases de données afin d'acquérir des données, des images et des textes devant être imprimés, par exemple la description des tissus, les codes et caractéristiques techniques relatifs, ainsi que des symboles contenant des informations sur des procédures de lavage.

5. Système (100) pour produire automatiquement des nuanciers de tissu, selon l'une des revendications précédentes, **caractérisé en ce que** ledit organe de préhension (144) dudit robot (143) comprend au moins une bobine de support (145) portant un ruban adhésif (40), qui est déroulé, passe sous une base arrondie (147), et est enroulé à nouveau sur au moins une seconde bobine (146) ; dans lequel ledit organe de préhension (144) comporte au moins un système de couplage d'air soufflé (148) avec des trous agencés sur les côtés supérieur et inférieur ; dans lequel ladite bobine de support (145) et ladite seconde bobine (146) de support sont adaptées pour bouger de manière synchrone, et pour arrêter de bouger lorsqu'une unité est saisie à partir dudit ensemble d'échantillons (20) de tissu.

6. Procédé (200) pour faire fonctionner un système (100) pour produire automatiquement des nuanciers de tissu, **caractérisé en ce qu'**il utilise le système selon l'une des revendications précédentes, et **en ce qu'**il comprend les étapes suivantes :
- la vérification (201) du niveau d'approvisionnement : dudit siège de réception (111), dudit chariot de port d'échantillons (170) et dudit logement de bande (191) ; dans lequel ladite étape de vérification (201) aboutit à un résultat positif (*Y*) ou à un résultat négatif (*N*) ; si ledit résultat est positif (*Y*), le procédé passe à l'étape de saisie (202) ; si ledit résultat est négatif (*N*), l'appareil de saisie de carton (120) s'arrête, et le procédé (200) continue avec une étape d'avertissement et d'attente (203) ; ladite étape d'avertissement et d'attente (203) fournit un signal d'avertissement et arrête les opérations réalisées par le système jusqu'à ce que ledit siège de réception soit approvisionné à nouveau avec ledit carton mince (10), ledit chariot de port d'échantillons (170) soit approvisionné à nouveau avec ledit ensemble d'échantillons (20) de tissu et/ou ledit logement de bande (191) soit réapprovisionné avec ladite bande de couleur (30), et jusqu'à ce qu'un opérateur (1) fournisse une entrée (220) concernant le réapprovisionnement qui a eu lieu ;
- la saisie (202) dudit carton mince (10) à partir dudit chariot mobile (110), par ledit appareil de saisie de carton (120) qui positionne celui-ci sur le transporteur à courroie (123) ;
- l'impression (204) du carton mince (10), réalisée par ladite imprimante (130) ;
- le retournement (205) du carton mince (10), réalisé par ledit bras robotisé (140), qui l'attrape tout d'abord à la sortie de ladite imprimante (130), puis le retourne, et ensuite le pose dans ledit poste de pliage et de découpage à l'emporte-pièce (150) ;
- le pliage et le découpage à l'emporte-pièce (206) du carton mince (10) au moyen dudit poste de pliage et de découpage à l'emporte-pièce (150) ;
- le retrait des échantillons (207) ; lors de cette étape le robot (143) saisit l'ensemble d'échantillons (20), en les prenant à partir dudit chariot de port d'échantillons (170) ;
- le collage et le pressage (208) de l'ensemble d'échantillons (20) sur ledit carton mince (10), dans ledit poste de collage et de pressage (160) ;
- le collage desdites bandes de couleur (209), dans lequel ladite bande de couleur (30) est collée sur le carton mince (10) au moyen dudit poste (190) pour appliquer des bandes de couleur ;
- l'inspection finale (210) du nuancier (50) créé par le système ; ladite étape d'inspection finale (210) fournit un résultat positif (*Y*) ou un résultat négatif (*N*) ; dans le cas affirmatif (*Y*), le procédé passe à l'étape de déchargement (211) dans laquelle le nuancier (50) est déchargé dans ledit poste de décharge (195) ; si le résultat est négatif (*N*), ledit procédé assure un transfert dudit nuancier (50) vers un poste de rebut (199) et déclenche une étape d'avertissement de rejet de nuancier (212).

7. Procédé (200) pour faire fonctionner un système (100) pour produire automatiquement des nuanciers de tissu, selon l'une des revendications précédentes, **caractérisé en ce que** ladite étape d'avertissement et d'attente (203) utilise des signaux lumineux, des signaux acoustiques et une signalisation de la technologie de l'information afin d'envoyer un avertissement.

8. Procédé (200) pour faire fonctionner un système (100) pour produire automatiquement des nuanciers de tissu, selon l'une des revendications précédentes, **caractérisé en ce que** ladite entrée (220) fournie par l'opérateur (1) peut être du type de la technologie de l'information, du type mécanique, exiger une identification biométrique et/ou de n'importe quel autre type qui permet un déverrouillage sécurisé du système.
